# EUROPÄISCHE PATENTSCHRIFT

(11) **EP 1 390 925 B1**
(45) Veröffentlichungstag und Bekanntmachung des Hinweises auf die Patenterteilung: **08.03.2006**
(21) Anmeldenummer: 02721941.9
(22) Anmeldetag: 07.05.2002
(51) Int. Cl.: G08B 13/24

(54) **DETEKTION EINES TRANSPONDERS AUF GROSSE REICHWEITEN**
LONG-RANGE DETECTION OF A TRANSPONDER
DETECTION A LONGUE DISTANCE D'UN TRANSPONDEUR

(30) Priorität: 16.05.2001 CH 916012001
(43) Veröffentlichungstag der Anmeldung: 25.02.2004
(73) Patentinhaber: SOKYMAT S.A., 1614 Granges (Veveyse) (CH)
(72) Erfinder: MIEHLING, Martin, CH-1614 Granges (Veveyse) (CH)
(74) Vertreter: Besse, François
(86) Internationale Anmeldenummer: PCT/CH2002/000246
(87) Internationale Veröffentlichungsnummer: WO 2002/093522

(56) Entgegenhaltungen:
- EP-A- 0 750 201
- WO-A-99/33017
- US-A- 5 995 019

## Beschreibung

Warensicherungssysteme, auch EAS Systeme (electronic article surveillance) genannt sind als Standardsysteme zur Diebstahlsicherung im weltweiten Gross- und Einzelhandel bekannt. Es sind Systeme mit verschiedenen physikalischen Wirkprinzipien (Akusto-resonanz, RF etc.) im Einsatz. Allen Systemen gemeinsam ist, dass ein Vorhandensein des Warensicherungsetikettes im Detektionsbereich auf eine möglichst grosse Distanz zu identifizieren sein sollten um die Behinderungen der Kundschaft im Detektionsbereich zu minimieren. Eine weitere Forderung sind eine kurze Detektionszeit von wenigen Millisekunden um ein schnelles Durchlaufen durch die Detektionsschranke noch zu identifizieren.

Dies erfüllen die bekannten EAS Systeme, je nach physikallschen Wirkprinzip und Arbeitsfrequenz, in unterschiedlicher Reichweite (System Vor und Nachteile der unterschiedlichen Systeme).

Einige Systeme erlauben es, das Warensicherungsetikett im Kasseribereich (POS = point of sales) zu deaktivieren, so dass es nicht von der Ware entfernt werden muss. Diese Art der Kennzeichnung hat sich vor allem bei Elektronikartikeln und Zubehör durchgesetzt, so dass hier bereits Hersteller der Elektronikartikel das Warensicherungsetikett in die entsprechenden Produkte (CD, Videotape, Kassetten...) integrieren und das Warensicherungsetikett über den ganzen Distributionsweg nutzbar machen. Darüber hinaus kann es ohne Zerstörung der Packung nicht von Dieben entfernt werden.

Ein zusätzlicher Nutzen könnte erzielt werden, wenn Warensicherungsetiketten sich zusätzlich noch mit Daten beschreiben lassen, so dass die Daten der Warensicherungsetiketten im Distributionskanal gelesen und ggf. geändert werden können. Dies würde es ermöglichen, total auf zusätzliche Preisschilder zu verzichten. Der Hersteller integriert die "intelligenten Warensicherungsetiketten" in seinem Produkten und kann herstellerspezifische Daten wie Charge, Fertigungsdatum, Vertriebsweg etc auf dem Etikett hinterlegen.

Der Grosshändler könnte im Rahmen seiner Wareneingangskontrolle /Warenausgangskontrolle zusätzliche Daten aufbringen bzw. die Produkte automatisch sortieren lassen. Optional kann je nach Kundenwunsch die EAS Funktion ein-oder ausgeschaltet werden.

Bei dem Endkunden angekommen, kann die Preisstellung auf dem gleichen Etikett erfolgen. Wie erwähnt wird, die Warensicherungsfunktion zweckmässigerweise bei Bezahlung der Ware im Kassenbereich deaktiviert.

Der Erfindung liegt die Aufgabe zugrunde, einen Datenträger mit einer minimalen Anzahl von Komponenten bzw Schaltkreisen zu entwickeln, der es ermöglicht die o.g. Aufgabenstellungen zu erfüllen, wie z.B integriert in ein Produkt gelesen und geschrieben zu werden, sowie gleichzeitig über grosse Reichweiten hinweg ein Alarmsignal auslösen zu können. Dies wurde weder durch die Kombination von EAS-Schaltkreisen mit Transponderschaltkreisen realisiert, noch durch das Kodieren einer EAS Funktion im Datenstrom des Transponders (EAS -Bit bzw EAS-Flag). Bei der Kodierung der EAS Funktion durch den ein spezielles Datenbit, welches mit den Daten übertragen wird, entspricht der Kommunikationsabstand (Lesereichweite) für die Datenübertragung auch der EAS-Detektionsreichweite und ist somit herkömmlichen EAS Systemen deutlich unterlegen.

EAS Etiketten der bekannten Art haben keinen Microchip integriert sondern lediglich Analogbauteile und Analogschaltkreise. Dadurch sind sie nicht in der Lage elektronische Daten digital zu speichern.: Sie übertragen lediglich durch lhr Vorhandensein im Detektionsfeld 1 Bit an Information (vorhanden Ja/Nein)

Ziel der Erfindung ist es, einen Transponder (der über einen Datenspeicher verfügt) derart einsetzen, dass er ein EAS Signal digital durch seine Logik gesteuert nachbildet und gleichzeitig die bekannten Transponderfunktionen unterstützt (digitaler Schreib-Lese Datenspeicher mit kontaktloser Datenübertragung).

Diese Aufgabenstellung wird dadurch gelöst, dass ein Transponder über seine Logik mit einem Signalgenerator (Modulator) versehen wird. Dies ermöglicht den Einsatz eines schreib -lesbaren Transponders für Originalitätsnachweis, Produktidentifikation, Distributionslogistik, Preisstellung und Warensicherung. Darüber hinaus ermöglicht es die offene Struktur des Signälgenerators auch weitere, noch nicht verwendete Signalmuster, für noch zu entwickelnde EAS-Systeme zu verwenden.

Kernidee ist es, mittels der Dämpfungsmodulation des Trägerfeldes mit einem Transponder ein Signal zu erzeugen, welches sich von der Frequenz des Trägerfeldes derart unterscheidet, dass sein Vorhandensein mit einem Frequenzfilter identifiziert werden kann (vorzugsweise mit existierenden EAS Systemen kompatibel sein kann.).

Es wird somit also möglich, einen "EAS-Transponder" zu produzieren, der wie ein gewöhnlicher Transponder Daten auf für passive Transponder typischen Übertragungsreichweiten von ca. 1m überträgt, sein Vorhandensein im elektromagnetischen Trägerfeld (Detektionsfeld) zusätzlich ein Detektionssignal generiert, welches auf grössere Reichweiten als die der Daten detektiert werden kann.

Der EAS-Transponder überträgt seine Daten durch eine Lastmodulation des elektromagnetischen Trägerfeldes entsprechend der benutzten Kodiervorschrift (z.B. Biphase, NRZ, Manchester...). Da Daten typ asymmetrisch sind; ist auch das erzeugte Signal asymmetrisch (denn für "0" und "1" werden unterschiedliche Signalverläufe erzeugt). Typische Übertragungsraten für Daten sind 50boud bis zu 100Kboud.

Um einen Transponder auszulesen, muss man seine Daten aus dem Feld herausfiltern. Der Transponder moduliert seine Daten mittels Dämpfungsmodulation (Amplitudenmodutiert) auf das Feld auf. Entsprechend der gewählten Modulationsart (ASK (amplitude-shift-keying); PSK (phase-s.-k.) oder FSK (frequency-s.-k.)) werden unterschiedliche Signalverläufe erzeugt, um eine "1" oder eine "0" zu kodieren. Die Lesereichweiten für die Identifikation der Daten sind auf ca. 1m limitiert, durch physikalische Gegebenheiten aktueller Filtersysteme.

Die Erzeugung des Detektionssignales erfolgt ebenfalls unter Zuhilfenahme der Lastmodulation. Anders als bei der Datenübertragung wird anstelle eines unsymmetrischen Signals (da 0 und 1 im Datenstrom normalerweise unregelmässig verteilt ist) ein symmetrisches Signal erzeugt. Die erzeugte Signalfrequenz liegt typischerweise in einem ausreichendem Störabstand zu dem Trägerfeld.

Das ledigliche Vorhandensein eines Signals auf einer definierten Frequenz oder in einem bestimmten Frequenzspektrum kann somit auf wesentlich grössere Reichweiten detektiert werden, als das Dekodieren des Datenstromes es ermöglicht.

Ermöglicht wird dies dadurch, dass in diesem Falle die Empfängerschaltung deutlich schmalbandiger ausgeführt werden kann. Da das Signal symmetrisch ist, kann mittels eines Integratorgliedes das Signal über einen gewissen Zeitraum addiert werden, welches zu einer weiteren Signalverstärkung und damit verbundenen Steigerung der Empfindlichkeit führt. Generell kann eine Steigerung der Detektionsempfindlichkeit von über +20dB gegenüber den Datensignalen erreicht werden.

In einem bevorzugten Aspekt der Erfindung, wird es realisiert, den Transponder mittels einer geeigneten Konfiguration, ein symmetrisches Dämpfungssignal auf das Feld modulieren zu lassen. Dieses Signal überträgt keine Daten bzw. das Lesegerät sucht auch nicht nach Daten, sondern lediglich, ob das Signal in der gewählten Frequenz ansteht. Ist dies der Fall wird eine Aktion ausgelöst (z.B. Alarm).

### Beispiel

Das Trägerfeld (CF) hat 100KHz. Der Transponder moduliert sein Detektions-Dämpfungssignal für jeweils CF/2 (Übertragung einer "1" in NRZ Modulation) und moduliert nicht für ebenfalls 2 Perioden des Trägerfeldes (Übertragung einer "0" in NRZ Modulation). Die zu übertragenden Daten wären also (01010101010.... oder 10101010101...)

Eine Periode des Trägerfeldes dauert 1/100KHz = 10us. Bei CF/2 wären also jeweils 2 Perioden des Trägerfeldes gedämpft (20us) und 2 Perioden ungedämpft (20us). Das erzeugte (Rechteck-)Signal hätte also eine Periodendauer T. von 40us und eine Frequenz von 1/T = 25KHz. Das Vorhandensein dieses 25KHz Signals kann mit einem Frequenzfilter (optimiert für z.B 25KHz) einfachst detektiert werden. Mit einem Integrationsglied lässt sich das Signal abhängig von der Integrationszeitkonstante I_{T} stufenlos verstärken, wenn IT > T gewählt wird. Die Empfängerschaltung detektiert nur das Vorhandensein der spezifischen Frequenz und fällt daraus die Entscheidung welche ein Bit repräsentiert (z.B: Signal vorhanden = 1; Signal nicht vorhanden = 0 bzw. Ja/Nein.

Abhängig von der gewählten Modulationsart (z.B.: NRZ, Manchester...), des gewählten Teilenierhältnisses für die Übertragung eines Bits (CF/2; CF/4; CF/6....) und der gewählten Datenstruktur zur Signalerzeugung (z.B.: 11111; 101010, 11001100; 111000111000....) können unterschiedlichste Signalfrequenzen erzeugt werden.

Das Vorhandensein der Antwortfrequenz kann einfach mittels eines Frequenzdetektors im Reader identifiziert werden.

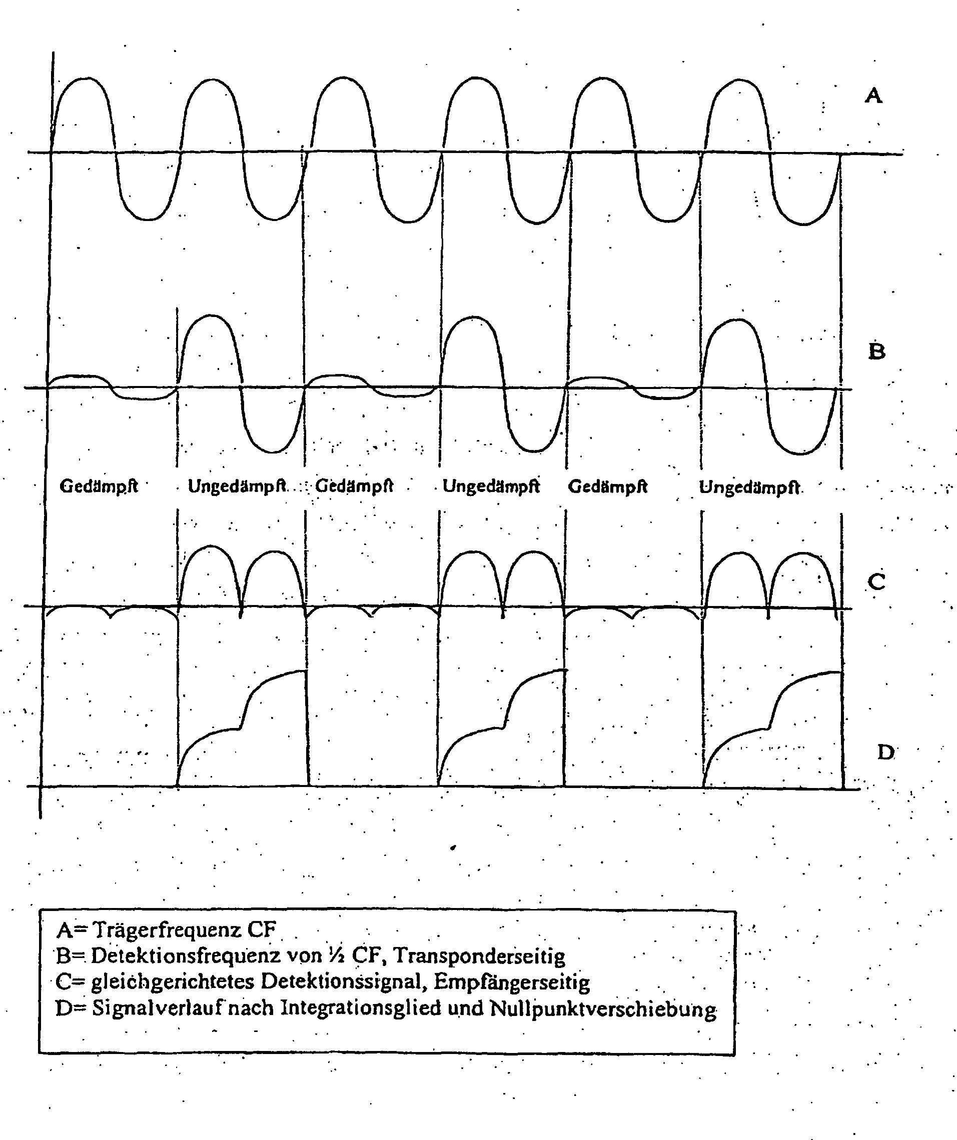

Der Einsatz als Warensicherungs-Transponder ermöglicht somit, je nach Ausführung, ein vielfältiges Programmieren der EAS-Antwortfrequenz. Dadurch ist es ohne zusätzlichen Hardwareaufwand möglich nicht nur eine Antwortfrequenz für widerrechtlich entwendete Ware sondern z.B. auch eine zweite für bezahlte Ware einzusetzen, bzw. Systeme mit unterschiedlichen Detektionsfrequenzen aufzubauen. Ein weiterer Vorteil ist, dass somit die Detektionsfrequenzen je nach länderspezifischen Reglementierungen der Frequenzen frei programmiert werden können.

Bei dem Einsatz der weitreichenden Detektion in industriellen Anwendungen ermöglicht das selektive Programmieren der Antwortfrequenzen das Detektieren mehrerer Produkte / Produktgruppen mit unterschiedlichen Antwortfrequenzen gleichzeitig und somit die Zuordnung in Gruppen etc.. Ein weiterer Vorteil ist das Optimieren der Detektionsreichweite dadurch, dass die für Anwendung, und Umgebungsbedingungen jeweils beste Frequenz gewählt werden kann. Je nach etwaig vorhanden Störeinflüssen, (Computermonitore, Schaltnetzteile, Frequenzumrichter....) kann das System somit einfach im Feld optimiert werden.

## Patentansprüche

1. Elektronisches Detektionsssystem, bestehend aus mindestens einem Transponder und mindestens einem Lesegerät, zur weitreichenden Detektion des Vorhandenseins eines RF-Transponders im Bereich eines durch das Lesegerät erzeugten elektromagnetischen Tägerfeldes, wobei das elektromagnetische Trägerfeld auch der Energieversorgung des RF-Transponders dient und das Lesegerät keine Daten- oder Synchronisationsimpulse an den Transponder überträgt, so dass der Transponder asynchron betrieben wird und seinen Arbeitstakt lediglich aus dem Trägerfeld generiert; **dadurch gekennzeichnet, dass** der RF-Transponder mittels Dämpfungsmodulation ein symmetrisches und kontinuierliches Detekttonssignal auf das Trägerfeld moduliert, welches sich von der Frequenz des Trägeneldes unterscheidet, so dass das Vorhandensein dieses Detektionssignals mittels einer schmalbandigen, selektiven Empfängerschaltung mit einem oder mehreren Integrationsgliedern auf grössere Reichweiten detektiert wird, als der RF-Transponder es beim senden von Daten ermöglichen würde.

2. System nach Anspruch 1, **dadurch gekennzeichnet, dass** das von dem Transponder erzeugte, symmetrische Detektionssignal durch das Senden einer speziellen, vorab programmierten, Datenstruktur des Transponders erfolgt.

3. Detektionssystem nach Anspruch 1 oder 2, **dadurch gekennzeichnet, dass** durch die Wahl der Integrationszeitkonstanten der Empfängerschältung, die maximal erreichbare Detektionsdistänz optimiert werden kann.

4. Detektionssystem nach Anspruch 1 bis 3, **dadurch gekennzeichnet, dass** der Transponders, je nach Konfiguration seines Modulationsverhaltens und der zu sendenden Datenstruktur, Detektionssignale auf verschiedenen Frequenzen erzeugen kann.

5. System nach Anspruch 1 bis 4 **dadurch gekennzeichnet, dass** mehrere Transponder gleichzeitig mit einem oder mehreren Lesegeräten auf einer oder mehreren Detektionsfrequenzen detektiert werden können.

6. Transponder zur Verwendung in einem Detektionssystem nach Anspruch 1 bis 5, **dadurch gekennzeichnet, dass** die elektronische Einheit des Transponders lediglich aus einer Antenne mit einem angeschlossenen Mikrochip besteht und passiv über das Trägerfeld mit Energie versorgt wird.

7. Transponder in Kombination mit einem Detektionssystem nach Anspruch 1 bis 5, **dadurch gekennzeichnet, dass** der Transponder durch einen zusätzlichen Energiespeicher oder Energieerzeuger aktiv mit Energie versorgt wird.

8. Transponder zur Verwendung in einem Detektionssystem nach Anspruch 1 bis 5, **dadurch gekennzeichnet, dass** es sich bei dem Transponder um einen nur-lese-Transponder (read-only Transponder) handell.

9. Transponder zur Verwendung in einem Detektionssystem nach Anspruch 1 bis 4, **dadurch gekennzeichnet, dass** es sich bei dem Transpor der um einen schreib-lese-Transponder (read-write) handelt.

10. Transponder zur Verwendung in einem Detektionssystem nach Anspruch 1 bis 5 **dadurch gekennzeichnet, dass** die von dem Transponder erzeugte Detektionsfrequenz niedriger ist als die Trägerfrequenz des Lesesystems.

11. Transponder zur Verwendung in einem Detektionssystem nach Anspruch 1 bis 5, **dadurch gekennzeichnet, dass** der Transponder je nach programmierter Datenstruktur und Konfiguration mehrere verschiedene Detektionsfrequenzen erzeugen kann.

12. Lesegerät in Kombination mit einem Detektionssystem nach Anspruch 1 bis 5, **dadurch gekennzeichnet, dass** die Leseeinheit mehr als eine Detektionsfrequenz empfangen und überwachen kann.

13. Einsatz von Verfahren, Systemen oder Komponenten, nach irgend einem der Ansprüche 1 bis 9, für die elektronische Artikelsicherung.

14. Einsatz von Verfahren, Systemen oder Komponenten, nach irgend einem der Ansprüche 1 bis 9, zur weitreichenden Detektion des Vorhandenseins eines RF-Transponderetikettes im Trägerfeld, **dadurch gekennzeichnet, dass** die Detektionsreichweite des RF-transponders die Kommunikationsreichweite (Lesen bzw. Schreiben von Daten) übertrifft.

## Claims

1. Electronic data systems, comprising at least one transponder and at least one reader, for the long-range detection of the presence of a RF transponder in the range of an electromagnetic carrier field generated by the reader, wherein the electromagnetic carrier field also supplies the energy for the RF transponder and the reader does not transmit any data or synchronisation impulses to the transponder, so that the transponder is operated asynchronously and generates its operation cycle only from the carrier field, **characterised in that** the RF transponder, by means of attenuation modulation, modulates a symmetrical and continual detection signal onto the carrier field, which differs from the frequency of the carrier field so that the existence of this detection signal can be detected by means of a narrow band selective receiver circuit with one or several integration links at a greater distance than possible by the RF transponder transmitting data.

2. A system according to claim 1, **characterised in that** the symmetrical detection signal generated by the transponder is made by transmitting a special, previously programmed, data structure of the transponder.

3. A detection system according to claim 1 to 3, **characterised in that** by choosing the integration time constant of the receiver circuit, the maximum possible detection distance can be optimised.

4. A detection system according to claim 1 to 3, **characterised in that** the transponder, depending on the configuration of its modulation behaviour and the data structure to be transmitted, can generate detection signals on different frequencies.

5. A system in according to 1 to 4, **characterised in that** several transponders can be detected simultaneously by one or several readers on one or several detection frequencies.

6. A transponder for the use in a detection system according to claim 1 to 5, **characterised in that** the electronic unit of the transponder only consists of an antenna with a connected microchip, being passively supplied with energy via the carrier field.

7. A transponder in combination with a detection system according to claim 1 to 5, **characterised in that** the transponder is actively supplied with energy by an additional energy reservoir or energy generator.

8. A transponder for the use in a detection system according to claim 1 to 5, **characterised in that** the transponder is a read-only transponder.

9. A transponder for the use in a detection system according to claim 1 to 4, **characterised in that** the transponder is a write/read transponder.

10. A transponder for the use in a detection system in according to claim 1 to 5, **characterised in that** the detection frequency generated by the transponder is lower than the carrier frequency of the reader system.

11. A transponder for the use in a detection system according to claim 1 to 5, **characterised in that** the transponder, depending on the programmed data structure and configuration, can generate several different detection frequencies.

12. A reader in combination with a detection system, according to claim 1 to 5, **characterised in that** the reading device can receive and monitor more than one detection frequency.

13. The use of methods, systems or components for electronic article surveillance according to any of the claims 1 to 9.

14. The use of methods, systems or components according to any of the claims 1 to 9 for the long range detection of the presence of a RF transponder label in the carrier field, **characterised in that** the detection range of the RF transponder exceeds the communication range (write / read data).

## Revendications

1. Système de détection électronique composé d'au moins un transpondeur et d'au moins un lecteur pour la détection sur une grande portée de la présence d'un transpondeur HF dans la zone d'un champ porteur électromagnétique généré par le lecteur, le champ porteur électromagnétique servant également à l'alimentation en énergie du transpondeur HF et le lecteur ne transmettent aucune impulsion de données ou de synchronisation au transpondeur, de manière à ce que le transpondeur fonctionne de manière asynchrone et génère sa fréquence de fonctionnement uniquement à partir du champ porteur, **caractérisé en ce que** le transpondeur HF module, au moyen d'une modulation d'affaiblissement, un signal de détection symétrique et continu sur le champ porteur, lequel se différentie de la fréquence du champ porteur de sorte que la présence de ce signal de détection puisse être détectée au moyen d'un circuit récepteur sélectif à bande étroite muni d'un ou de plusieurs intégrateurs sur une portée plus grande que celle que permettrait le transpondeur HF lors de l'émission de données.

2. Système selon la revendication 1, **caractérisé en ce que** le signal de détection symétrique généré par le transpondeur est réalisé par l'émission d'une structure de données spéciale programmée à l'avance du transpondeur.

3. Système de détection selon la revendication 1 ou 2, **caractérisé en ce que** la distance de détection maximale possible peut être optimisée par le choix de la constante de temps d'intégration du circuit récepteur.

4. Système de détection selon les revendications 1 à 3, **caractérisé en ce que** le transpondeur, suivant la configuration de son mode de modulation et de la structure de données à émettre, peut générer des signaux de détection à différentes fréquences.

5. Système selon les revendications 1 à 4, **caractérisé en ce que** plusieurs transpondeurs peuvent être détectés simultanément avec un ou plusieurs lecteurs sur une ou plusieurs fréquences de détection.

6. Transpondeur destiné à être utilisé dans un système de détection selon les revendications 1 à 5, **caractérisé en ce que** l'unité électronique du transpondeur se compose uniquement d'une antenne à laquelle est raccordée une micropuce et qu'elle est alimentée en énergie de manière passive par le biais du champ porteur.

7. Transpondeur combiné avec un système de détection selon les revendications 1 à 5, **caractérisé en ce que** le transpondeur est alimenté en énergie de manière active par un accumulateur d'énergie ou un générateur d'énergie supplémentaire.

8. Transpondeur destiné à être utilisé dans un système de détection selon les revendications 1 à 5, **caractérisé en ce que** le transpondeur est un transpondeur à lecture seule (read-only transponder).

9. Transpondeur destiné à être utilisé dans un système de détection selon les revendications 1 à 5, **caractérisé en ce que** le transpondeur est un transpondeur à écriture/lecture (read-write).

10. Transpondeur destiné à être utilisé dans un système de détection selon les revendications 1 à 5, **caractérisé en ce que** la fréquence de détection générée par le transpondeur est inférieure à la fréquence porteuse du système de lecture.

11. Transpondeur destiné à être utilisé dans un système de détection selon les revendications 1 à 5, **caractérisé en ce que** le transpondeur, suivant la structure de données et la configuration programmées, peut générer différentes fréquences de détection.

12. Lecteur combiné avec un système de détection selon les revendications 1 à 5, **caractérisé en ce que** l'unité de lecture peut recevoir et surveiller plus d'une fréquence de détection.

13. Utilisation de procédés, de systèmes ou de composants selon l'une quelconque des revendications 1 à 9 pour la protection électronique d'articles.

14. Utilisation de procédés, de systèmes ou de composants selon l'une quelconque des revendications 1 à 9 pour la détection à grande portée de la présence d'une étiquette à transpondeur HF dans le champ porteur, **caractérisée en ce que** la portée de détection du transpondeur HF dépasse la portée de communication (lecture ou écriture de données).
